# EUROPÄISCHE PATENTSCHRIFT

(11) **EP 2 771 211 B1**
(45) Veröffentlichungstag und Bekanntmachung des Hinweises auf die Patenterteilung: **27.04.2016**
(21) Anmeldenummer: 12753661.3
(22) Anmeldetag: 01.08.2012
(51) Int. Cl.: B60R 21/2165

(54) **ABDECKUNG FÜR EINE AIRBAGANORDNUNG**
CLOSURE FOR AN AIR BAG ASSEMBLY
COUVERCLE POUR UN ASSEMBLAGE COMPRENANT UN SAC DE SÉCURITÉ GONFLABLE

(30) Priorität: 05.08.2011 DE 102011109559; 22.06.2012 DE 102012012249
(43) Veröffentlichungstag der Anmeldung: 03.09.2014
(73) Patentinhaber: Johnson Controls Interiors GmbH & Co. KG, 47929 Grefrath (DE)
(72) Erfinder: KRISCH, Wolfgang, 42799 Leichlingen (DE); AUST, Stefan, 42855 Remscheid (DE)
(74) Vertreter: Trinks, Ole
(86) Internationale Anmeldenummer: PCT/EP2012/003274
(87) Internationale Veröffentlichungsnummer: WO 2013/020669

(56) Entgegenhaltungen:
- WO-A1-99/65739
- GB-A- 2 439 011
- US-A- 5 451 075

## Beschreibung

### Stand der Technik

Die Erfindung betrifft ein Ausstattungsteil für den Innenraum eines Fahrzeugs, insbesondere eines Kraftfahrzeugs, mit einer im Ausstattungsteil angeordneten Austrittsklappe für den sich entfaltenden Luftsack (Airbag).

Es ist aus dem Stand der Technik bekannt, die Sicherheit von Fahrzeuginsassen durch die Verwendung von Airbags, welche sich im Falle eines Unfalls schlagartig entfalten, zu erhöhen. Solche Airbags werden üblicherweise in einem zusammengefalteten Zustand unterhalb einer innenraumverkleidung, beispielsweise im Bereich des Armaturenbretts, des Fahrzeugs angeordnet und entfalten sich durch die Verkleidung in den Fahrgastraum. Die Verkleidung ist hierfür mit einer Sollbruchstelle versehen, welche ein Aufklappen der Verkleidung zur Bereitstellung einer Entfaltungsöffnung erlaubt. Nachteilig an solchen Anordnungen ist, dass die Zeit zum Öffnen der Airbagklappe häufig verhältnismäßig lang ist.

Aus dem Dokument GB 2439011 ist ein Ausstattungsteil nach dem Oberbegriff des Anspruchs 1 bekannt.

Ein ähnliches Innenausstattungsteil ist beispielsweise aus der Druckschrift DE 102 25 813 A1 bekannt, welches einen mit einer Dekorschicht versehenden Träger aufweist, der ein im Bereich des Beifahrersitzes befindliches, in einem Führungsschacht angeordnetes Airbagmodul aufweist, welcher zum Fahrzeuginnenraum mittels einer Abdeckung verschlossen ist, wobei die Abdeckung eine Sollbruchstelle zur Ausbildung einer Airbag-Austrittsklappe aufweist.

### Offenbarung der Erfindung

Der Erfindung liegt die Aufgabe zugrunde, die Öffnungszeit der Austrittsklappe im Falle eines den Airbag aktivierenden Ereignisses zu verkürzen und somit die Sicherheit für einen Fahrzeuginsassen zu erhöhen.

Diese Aufgabe wird erfindungsgemäß durch ein Ausstattungsteil, nach Anspruch 1 gelöst.

Das erfindungsgemäße Ausstattungsteil hat gegenüber dem Stand der Technik den Vorteil, dass aufgrund der fehlenden flächigen Anbindung der Verstärkung an den Träger die Verstärkung in der Trennzone gegenüber dem Träger verschiebblich ist. Hierdurch wird eine Schwenkbewegung der Austrittsklappe begünstigt, so dass die Öffnungszeit der Austrittsklappe im Falle eines den Airbag aktivierenden Ereignisses verkürzt wird. Vorzugsweise ist in der Trennzone die Verstärkung vom Träger zumindest teilweise beabstandet ist und/oder gegenüber dem Träger beweglich.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass außerhalb der Trennzone die Verstärkung fest und insbesondere stoffschlüssig mit dem Träger verbunden ist, so dass vorteilhafterweise stets eine Anbindung der Austrittsklappe an den Träger gewährleistet ist. Auf diese Weise wird verhindert, dass die Austrittsklappe beim Öffnen des Airbags abgerissen und in den Fahrzeuginnenraum geschleudert wird. Innerhalb der Trennzone weist die Verstärkung vorzugsweise keine feste stoffschlüssige Verbindung zum Träger auf, damit die Öffnungsbewegung der Austrittsklappe begünstigt wird.

Gelöst wird die vorliegende Aufgabe ferner durch ein Ausstattungsteil, welches einen steifen Träger aufweist, wobei der Träger eine aufschwenkbare Austrittsklappe aufweist und die Austrittklappe beim Öffnen über eine Scharnierung mit dem Träger verbunden bleibt und der Träger mit der Austrittklappe über eine vorzugsweise stoffschlüssig angebundene flexible Verstärkung verbunden ist und entlang der Scharnierung eine Trennzone vorgesehen ist, in welcher die Verstärkung nicht stoffschlüssig mit dem Träger verbunden ist.

Die Verstärkung besteht mit Vorteil aus einem textilen Flächengebilde, insbesondere einem grobmaschigen Gewebe. Die Verstärkung ist vorzugsweise auf eine Flächenseite des Trägers aufgesetzt, insbesondere auf die der Schwenkrichtung abgewandte Flächenseite (Rückseite des Trägers). Die Verstärkung ist bevorzugt durch Anspritzen des Träger oder Aufpressen auf den Träger mit diesem verbunden. Die Austrittsklappe ist vorzugsweise durch eine partiell umlaufende Sollbruchstelle einstückig mit dem Träger ausgebildet. Die Austrittklappe wird vorzugsweise durch eine auf der Rückseite des Trägers umlaufende Kerbe begrenzt. Die Sollbruchstelle ist vorzugsweise durch eine linienförmige Anordnung von den Träger durchdringenden Bohrungen, insbesondere im Bereich der Kerbe, ausgebildet.

Der Träger ist vorzugsweise auf seiner Vorderseite mit einer Dekorhaut ausgestattet. Zwischen Dekorhaut und Träger ist vorzugsweise eine Schaumlage angeordnet.

Mit besonderem Vorteil ist vorgesehen, dass die Trennzone streifenförmig entlang der Scharnierung verläuft. Vorzugsweise ist die Trennzone auf der der Austrittsklappe zugewandte Seite der Scharnierung vorgesehen.

Gemäß der vorliegenden Erfindung ist vorgesehen, dass die Verstärkung im Bereich der Trennzone gefaltet und insbesondere Z-förmig gefaltet ist. In vorteilhafter Weise wird somit eine Relativbewegung zwischen der Verstärkung und dem Träger während der Öffnungsbewegung der Austrittsklappe begünstigt. Die Faltung stellt somit eine definierte Überlänge zur Unterstützung der Scharnierfunktion dar.

Gemäß der vorliegenden Erfindung ist vorgesehen, dass in mindestens eine Falte der insbesondere Z-förmigen Faltung ein Trennmittel eingebracht ist. Das Trennmittel besteht mit Vorteil aus einem Flächengebilde, welches vorzugsweise gegenüber der Schmelze des Trägerwerkstoffs dicht ist und damit eine stoffschlüssige Verbindung des Trägerwerkstoffs mit der Verstärkung in diesem Bereich verhindert. Das Trennmittel fungiert insbesondere als Schmelz-Barriere für die Faltung, damit die Faltung aus der Kunststoff-Matrix des Trägers bei allen Temperaturen ausknüpfen kann. Diese Schmelz-Barriere kann durch einen Einleger oder durch eine lokale Verdichtung des Gewebes erzeugt werden.

Gemäß einer weiteren bevorzugten Ausführungsform der vorliegenden Erfindung ist vorgesehen, dass das Ausstattungsteil Positionshaltemittel für die Verstärkung in der Trennzone aufweist, wobei die Positionshaltemittel vorzugsweise im Bereich der insbesondere Z-förmigen Faltung angeordnet sind. Die Positionshaltemittel umfassen insbesondere eine beim Auslösen des Airbags aufbrechbare Verbindung zwischen wenigstens zwei übereinander gefaltete Lagen der Verstärkung umfasst. Die Faltung wird somit mit Hilfe einer einstellbaren Reißnaht fixiert, die sich durch die Airbagauslösung definiert öffnet, und somit die Z-Falte freigibt. Die Z-förmige Faltung in der Verstärkung wird (gegebenenfalls einschließlich des Trennmittels) vorzugsweise durch eine beim Auslösen des Airbags aufbrechbare Verbindung während der Herstellung des Ausstattungsteils in Position gehalten

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1a**: zeigt eine schematische Schnittbildansicht eines Ausstattungsteils gemäß einer beispielhaften Ausführurigsform der vorliegenden Erfindung im geschlossenen Zustand.
- **Figur 1b**: zeigt eine schematische Schnittbildansicht des Ausstattungsteils gemäß der beispielhaften Ausführungsform der vorliegenden Erfindung im aufgeklappten Zustand.
- **Figur 2**: zeigt eine schematische Detailansicht der Trennzone und der ZFaltung des Ausstattungsteils gemäß der beispielhaften Ausführungsform der vorliegenden Erfindung im aufgeklappten Zustand.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

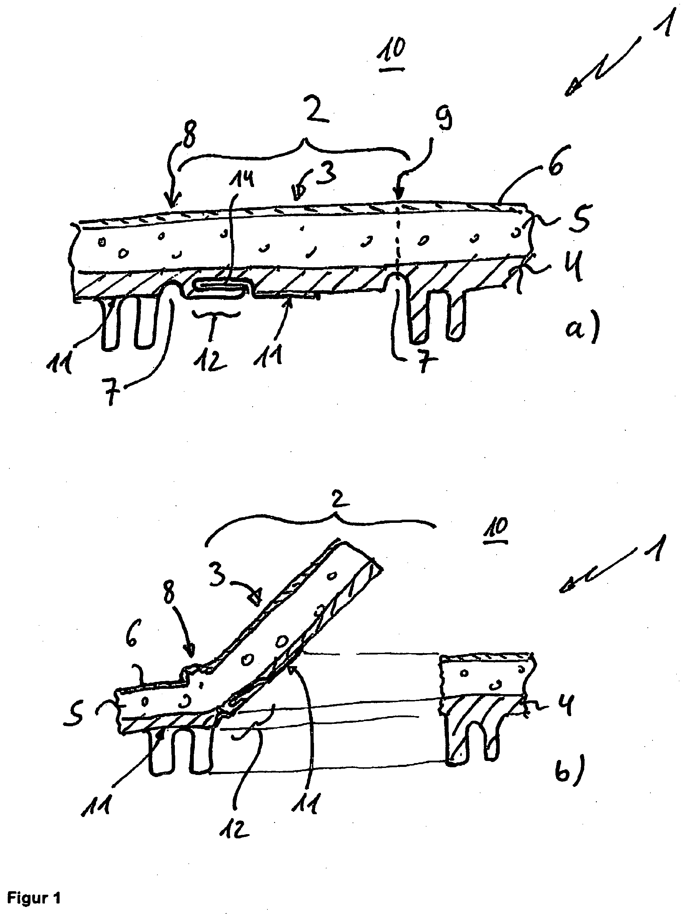

Das in **Figuren 1a und 1b** gezeigte Ausstattungsteil 1 ist als Armaturentafel für ein Kraftfahrzeug ausgebildet und weist einen Bereich 2 auf, in dem es eine Austrittklappe 3 für den sich entfaltenden Airbag ausbildet. Das Ausstattungsteil 1 besteht aus einem steifen, thermoplastischen Kunststoff enthaltenden Träger 4, einer diesen überdeckende Schaumlage 5 sowie einer sichtseitigen Dekorhaut 6. Die Austrittklappe 3 ist durch eine rückseitig umlaufende Kerbe 7 am Träger begrenzt und weist eine linienförmige Scharnierung 8 auf. Die übrigen Kanten der Austrittsklappe 3 sind über Sollbruchstellen 9 in Träger 4, Schaumlage 5 und Dekorhaut 6 mit dem übrigen Ausstattungsteil 1 verbunden. Beim Entfalten des Airbags reißen die Sollbruchstellen 9 auf und die Austrittsklappe 3 schwenkt zum Fahrzeuginnenraum 10 hin auf (Figur 1b). In Designposition (Figur 1a) ist die Airbagklappe 3 unsichtbar bzw. durch den Träger 4 und die Dekorschicht 6 in Richtung der Fahrgastzelle verdeckt.

Auf seiner dem Fahrzeuginnenraum 10 abgewandten Rückseite ist der Träger 4 beiderseits der Scharnierung 8 mit einer biegsamen, flächigen Verstärkung 11 in Form eines grobmaschigen Gewebes ausgestattet, welches ein Abreißen der Austrittsklappe 3 im Bereich der Scharnierung 8 verhindert. Die Verstärkung 11 ist stoffschlüssig mit dem Werkstoff des Trägers 4 verbunden, insbesondere durch Anhaften und/oder Eindringen von aufgeschmolzenem Trägerwerkstoff. Durch ein Eindringen von Schmelze in die Maschen kann auch ein Formschluss herbeigeführt werden.

Um die zum Schwenken der Austrittklappe 3 erforderlichen Kräfte und damit auch die Öffnungszeit zu verringern, ist die Verstärkung 11 auf der der Austrittklappe 3 zugewandten Seite des Trägers 4 entlang der Scharnierung 8 mit einer Trennzone 12 ausgestattet, in welcher die Verstärkung 11 nicht unmittelbar mit dem Träger 4 verbunden ist. Im Bereich der Trennzone 12 ist die Verstärkung Z-förmig gefaltet, so dass bei einem Aufschwenken des Austrittklappe 3 die Z-förmige Faltung nahezu kraftfrei gestreckt wird, ohne dass die Verstärkung selber gedehnt oder vom Träger 4 gelöst wird. Die Z-förmige Faltung erstreckt sich in Designposition entlang der Rückseite des Trägers 4 und benötigt keinen zusätzlichen Bauraum.

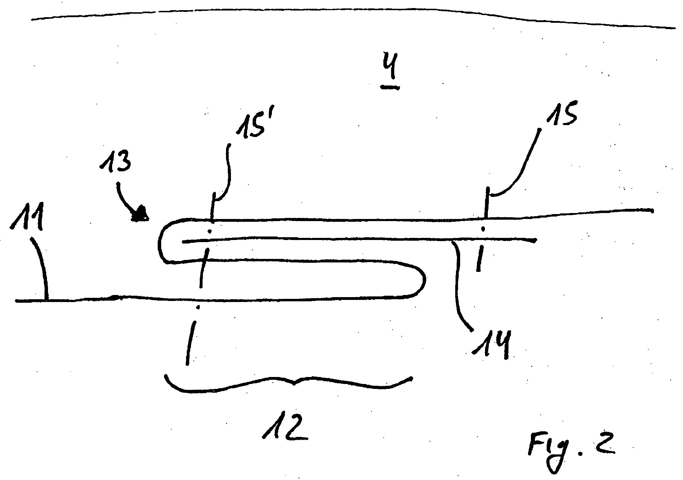

In **Figur 2** ist die Z-förmige Faltung in einer Vergrößerungsansicht dargestellt. In die obere Falte 13 der Verstärkung 11 ist ein streifenförmiges, schmelzedichtes Trennmittel 14, beispielsweise ein Band aus PTFE, eingeführt, welches verhindert, dass bei der Fertigung Schmelze des Trägerwerkstoffs in Kontakt mit den darunter liegenden Bereichen der Verstärkung 11 gelangt. Im Bereich der Trennzone 12 kann die Verstärkung 11 somit durch ein bloßes Gleiten der aneinander liegenden Bereiche der Verstärkung 11 gestreckt werden. Damit sich die Z-förmige Faltung nicht vor der Verbindung der Verstärkung 11 mit dem Träger 4 auffaltet, sind zwischen Verstärkung 11 und Trennmittel 14 zwei aufbrechbare Verbindungen in Form von Reißnähten 15, 15' vorgesehen. Die erste Reißnaht 15 verbindet das Trennmittel 14 mit einem jenseits der Öffnung der Falte 13 befindlichen Teil der Verstärkung 11, während die zweite Reißnaht 15' das Trennmittel sowie drei gefaltete Lagen der Verstärkung 3 durchdringt. Die Reißkraft der Reißnähte 15, 15' ist so bemessen, dass sie das Aufschwenken der Austrittsklappe 3 nicht nennenswert beeinflusst.

### Bezugszeichenliste

- 1: Ausstattungsteil
- 2: Bereich (des Airgabaustritts)
- 3: Austrittsklappe
- 4: Träger
- 5: Schaumlage
- 6: Dekorhaut
- 7: Kerbe
- 8: Scharnierung
- 9: Sollbruchstelle
- 10: Fahrzeuginnenraum
- 11: Verstärkung
- 12: Trennzone
- 13: Falte
- 14: Trennmittel
- 15, 15': Reißnaht

## Patentansprüche

1. Ausstattungsteil (1), insbesondere für ein Kraftfahrzeug, aufweisend einen Träger (4), wobei der Träger (4) einen eine aufschwenkbare Austrittsklappe (3) umfassenden Schwenkbereich und einen Festbereich umfasst, wobei das Ausstattungsteil (1) derart ausgebildet ist, dass die Austrittklappe (3) beim Öffnen über eine Scharnierung (8) mit dem Festbereich verbunden bleibt, wobei der Festbereich mit der Austrittklappe (3) über eine flexible Verstärkung (11) verbunden ist und wobei entlang der Scharnierung (8) eine Trennzone (12) zwischen dem Schwenkbereich und dem Festbereich vorgesehen ist, in welcher die Verstärkung (11) nicht flächig an den Träger (4) angebunden ist, **dadurch gekennzeichnet, daß**
die Verstärkung (11) im Bereich der Trennzone gefaltet und insbesondere Z-förmig gefaltet ist;
wobei in mindestens eine Falte (13) der insbesondere Z-förmigen Faltung ein Trennmittel (14) eingebracht ist; und
wobei das Trennmittel (14) ein Flächengebilde umfasst, welches vorzugsweise gegenüber der Schmelze des Trägerwerkstoffs dicht ist.

2. Ausstattungsteil (1) nach Anspruch 1, wobei in der Trennzone (12) die Verstärkung (11) vom Träger (4) zumindest teilweise beabstandet ist und/oder gegenüber dem Träger (4) beweglich ist.

3. Ausstattungsteil (1) nach Anspruch 1 oder 2, wobei außerhalb der Trennzone (12) die Verstärkung (11) fest und insbesondere stoffschlüssig mit dem Träger (4) verbunden ist.

4. Ausstattungsteil (1) nach einem der vorhergehenden Ansprüche, wobei innerhalb der Trennzone (12) die Verstärkung (11) keine feste stoffschlüssige Verbindung zum Träger (4) aufweist.

5. Ausstattungsteil (1) nach einem der vorhergehenden Ansprüche, wobei die Verstärkung (11) ein textiles Flächengebilde, insbesondere ein grobmaschiges Gewebe, umfasst.

6. Ausstattungsteil (1) nach einem der vorhergehenden Ansprüche, wobei außerhalb der Trennzone (12) die Verstärkung (11) auf eine Flächenseite des Trägers (4), insbesondere auf die der Schwenkrichtung abgewandte Flächenseite, aufgebracht ist.

7. Ausstattungsteil (1) nach Anspruch 6, wobei außerhalb der Trennzone (12) der Träger (4) an die Verstärkung (11) angespritzt ist und/oder die Verstärkung (11) auf den Träger (4) angepresst ist.

8. Ausstattungsteil (1) nach einem der vorhergehenden Ansprüche, wobei die Austrittsklappe (3) durch eine partiell umlaufende Sollbruchstelle im Träger (4) ausgebildet ist.

9. Ausstattungsteil (1) nach einem der vorhergehenden Ansprüche, wobei der Träger (4) auf seiner Vorderseite mit einer Dekorhaut (6) ausgestattet ist, wobei zwischen der Dekorhaut (6) und dem Träger (4) vorzugsweise eine Schaumlage (5) angeordnet ist.

10. Ausstattungsteil (1) nach einem der vorhergehenden Ansprüche, wobei die Trennzone (12) streifenförmig entlang der Scharnierung (8) verläuft, wobei die Trennzone (12) vorzugsweise auf einer der Austrittsklappe zugewandten Seite der Scharnierung (8) vorgesehen.

11. Ausstattungsteil (1) nach einem der vorhergehenden Ansprüche, wobei das Ausstattungsteil (1) Positionshaltemittel für die Verstärkung (11) in der Trennzone (12) aufweist, wobei die Positionshaltemittel vorzugsweise im Bereich der insbesondere Z- förmigen Faltung angeordnet sind.

12. Ausstattungsteil (1) nach Anspruch 11, wobei die Positionshaltemittel eine beim Auslösen des Airbags aufbrechbare Verbindung zwischen wenigstens zwei übereinander gefaltete Lagen der Verstärkung (11) umfasst.

## Claims

1. A fixture (1), particularly for a motor vehicle, comprising a support (4), wherein the support (4) comprises a pivoting region encompassing a pivotable exit flap (3) and a fixed region, wherein the fixture (1) is designed such that the exit flap (3) remains connected to the fixed region when opened by means of a hinge (8), wherein the fixed region is connected to the exit flap (3) via a flexible reinforcement (11), and wherein a separating zone (12) is provided along the hinge (8) between the pivoting region and the fixed region in which the reinforcement (11) is not in flat connection with the support (4),
**characterized in that**
the reinforcement (11) is folded, particularly in a Z shape, in the region of the separating zone;
wherein a separating means (14) is introduced into at least one fold (13) of the particularly Z-shaped folding; and
wherein the separating means (14) has a surface structure which is preferably impermeable to the melt of the support material.

2. The fixture (1) according to claim 1,
wherein the reinforcement (11) is at least partly distanced from the support (4) in the separating zone (12) and/or movable relative to the support (4).

3. The fixture (1) according to claim 1 or 2,
wherein the reinforcement (11) is fixedly connected and in particular bonded to the support (4) externally of the separating zone (12).

4. The fixture (1) according to any one of the preceding claims,
wherein the reinforcement (11) has no fixed bond to the support (4) within the separating zone (12).

5. The fixture (1) according to any one of the preceding claims,
wherein the reinforcement (11) has a textile surface structure, in particular a coarse mesh fabric.

6. The fixture (1) according to any one of the preceding claims,
wherein the reinforcement (11) is fixed externally of the separating zone (12) to a surface side of the support (4), particularly the far surface side from the pivoting direction.

7. The fixture (1) according to claim 6,
wherein the support (4) is molded onto the reinforcement (11) and/or the reinforcement (11) is pressed onto the support (4) externally of the separating zone (12).

8. The fixture (1) according to any one of the preceding claims,
wherein the exit flap (3) is formed by a partially circumferential predetermined breaking point in the support (4).

9. The fixture (1) according to any one of the preceding claims,
wherein the support (4) is provided with a decorative skin (6) on its front side, wherein a foam layer (5) is preferably arranged between the decorative skin (6) and the support (4).

10. The fixture (1) according to any one of the preceding claims,
wherein the separating zone (12) extends along the hinge (8) in the form of a strip, wherein the separating zone (12) is preferably provided on a side of the hinge (8) facing the exit flap.

11. The fixture (1) according to any one of the preceding claims,
wherein the fixture (1) comprises position retaining means in the separating zone (12) for the reinforcement (11), wherein the position retaining means are preferably arranged in the region of the in particular Z-shaped folding.

12. The fixture (1) according to claim 11,
wherein the position retaining means comprises a connection between at least two superimposed folded layers of the reinforcement (11) which is able to break upon the release of the airbag.

## Revendications

1. Pièce d'équipement (1), en particulier pour véhicule automobile, comprenant un support (4), ledit support (4) incluant une zone pivotante (3) incluant un volet de sortie (3) capable de pivoter en ouverture, et une zone fixe, dans laquelle la pièce d'équipement (1) est réalisée de telle façon que, lors de l'ouverture, le volet de sortie (3) reste relié à la zone fixe via un moyen formant charnière (8), dans laquelle la zone fixe est reliée au volet de sortie (3) via un renforcement flexible (11), et dans laquelle il est prévu le long du moyen formant charnière (8) une zone de séparation (12) entre la zone pivotante et la zone fixe, dans laquelle le renforcement (11) n'est pas relié de manière surfacique au support (4),
**caractérisée en ce que** le renforcement (11) est replié dans la région de la zone de séparation, et en particulier replié en forme de Z ;
dans laquelle un moyen de séparation (14) est introduit dans au moins un pli (13) du pliage, en particulier en forme de Z ; et
dans laquelle le moyen de séparation (14) inclut une structure surfacique qui est de préférence étanche par rapport aux liquides résultant de la fusion du matériau porteur.

2. Pièce d'équipement (1) selon la revendication 1, dans laquelle, dans la zone de séparation (12), le renforcement (11) est au moins localement écarté du support (4) et/ou mobile par rapport au support (4).

3. Pièce d'équipement (1) selon la revendication 1 ou 2, dans laquelle, à l'extérieur de la zone de séparation (12), le renforcement est relié de manière ferme avec le support (4), et en particulier par coopération de matières.

4. Pièce d'équipement (1) selon l'une des revendications précédentes, dans laquelle, à l'intérieur de la zone de séparation (12), le renforcement (11) ne présente aucune liaison par coopération de matières vis-à-vis du support (4).

5. Pièce d'équipement (1) selon l'une des revendications précédentes, dans laquelle le renforcement (11) inclut une structure surfacique textile, en particulier un tissu à mailles grossières.

6. Pièce d'équipement (1) selon l'une des revendications précédentes, dans laquelle, à l'extérieur de la zone de séparation (12), le renforcement (11) est rapporté sur un côté plat du support (4) en particulier sur le côté plat détourné de la direction de pivotement.

7. Pièce d'équipement (1) selon la revendication 6, dans laquelle, à l'extérieur de la zone de séparation (12), le support (4) est surmoulé sur le renforcement et/ou le renforcement (11) est assemblé par pressage sur le support (4).

8. Pièce d'équipement (1) selon l'une des revendications précédentes, dans laquelle le volet de sortie (3) est réalisé par un emplacement de rupture de consigne sur une partie de la périphérie du support (4).

9. Pièce d'équipement (1) selon l'une des revendications précédentes, dans laquelle le support (4) est doté d'une peau de décoration (6) sur sa face antérieure, et une couche de mousse (5) est agencée de préférence entre la peau de décoration (6) et le support (4).

10. Pièce d'équipement (1) selon l'une des revendications précédentes, dans laquelle la zone de séparation (12) s'étend en formant un ruban le long du moyen formant charnière (8), et la zone de séparation (12) est prévue de préférence sur un côté du moyen formant charnière (8) tourné vers le volet de sortie.

11. Pièce d'équipement (1) selon l'une des revendications précédentes, dans laquelle la pièce d'équipement (1) comprend des moyens de maintien en position pour le renforcement (11) dans la zone de séparation (12), lesdits moyens de maintien en position étant de préférence agencés dans la région du pliage, en particulier en forme de Z.

12. Pièce d'équipement (1) selon la revendication 11, dans laquelle les moyens de maintien en position incluent une liaison, susceptible d'être rompue lors du déclenchement de l'airbag, entre au moins deux couches repliées l'une sur l'autre du renforcement (11).
